# EUROPÄISCHE PATENTANMELDUNG

(11) **EP 0 899 715 A2**
(43) Veröffentlichungstag der Anmeldung: **03.03.1999**
(21) Anmeldenummer: 98115769.6
(22) Anmeldetag: 21.08.1998
(51) Int. Cl.: G09G 5/00, G06F 3/14

(54) **Verfahren zum Betreiben eines ein Fernsehgerät und einen Personalcomputer aufweisenden Mediengeräts**

(30) Priorität: 27.08.1997 DE 19737115
(71) Anmelder: Metec MultiMedia Technik GmbH & Co. KG, 76307 Karlsbad (DE)
(72) Erfinder: Kauselmann, Rainer, 75203 Köngisbach-Stein (DE)
(74) Vertreter: Schäfer, Wolfgang, Dipl.-Ing.

(57) **Zusammenfassung**

Es wird ein Mediengerät beschrieben, das ein Fernsehgerät und einen Personalcomputer aufweist. Mittels des Mediengeräts ist eine nicht-fernsehbezogenen Anwendung, beispielsweise eine Internet-Anwendung, aufrufbar. Dabei ist die Anwendung aufgrund einer in einer Fernsehsendung angezeigten Kennzeichnung der Anwendung, beispielsweise aufgrund einer Internet-Adresse, automatisch aufrufbar.

## Beschreibung

Die Erfindung betrifft ein Verfahren zum Betreiben eines ein Fernsehgerät und einen Personalcomputer aufweisenden Mediengeräts. Des weiteren betrifft die Erfindung ein Mediengerät, das ein Fernsehgerät und einen Personalcomputer aufweist.

Derartige Medien- oder Multimediageräte sind im Handel erhältlich und weisen beispielsweise ein Fernsehgerät auf, in das ein Personalcomputer integriert ist. Ebenfalls ist es möglich, daß ein Fernsehgerät und ein von dem Fernsehgerät unabhängiger Personalcomputer über eine Datenschnittstelle miteinander verbunden sind und auf diese Weise zusammen das Multimediagerät bilden. Eine weitere Möglichkeit besteht darin, daß ein Personalcomputer mit einer Fernseh-Einbaukarte versehen ist und auf diese Weise das Multimediagerät darstellt.

An den Personalcomputer ist eine Tastatur und gegebenenfalls eine Maus angeschlossen. Des weiteren ist der Personalcomputer über ein Modem mit dem allgemeinen Telefonnetz verbunden. Ebenfalls kann der Personalcomputer über eine ISDN-Karte, eine LAN-Karte oder dergleichen ganz allgemein mit einem Datennetzwerk, unter anderem auch mit einem Funknetz verbunden sein.

Das Fernsehgerät und der Personalcomputer benutzen beide den Bildschirm des Fernsehgeräts zur jeweiligen Anzeige, also entweder zur Anzeige einer Fernsehsendung oder eines Videotextes oder dergleichen oder zur Anzeige einer Anwendung des Personalcomputers. Es ist jedoch ebenfalls möglich, daß der Personalcomputer und das Fernsehgerät mit separaten Bildschirmen versehen sind, so daß auf den jeweiligen Bildschirmen auch gleichzeitig eine Fernsehsendung oder ein videotext oder dergleichen und eine Anwendung des Personalcomputers angezeigt werden kann.

Bei einer Anwendung des Personalcomputers kann es sich beispielsweise um eine Internet-Anwendung, also um einen Zugriff auf das Internet mittels eines Intenet-Zugriffsprogramms, oder um eine Telefax-Anwendung, also um ein Versenden eines Telefaxes mittels eines Telefax-Programms, handeln. Weitere Anwendungen des Personalcomputers sind beispielsweise ein Textverarbeitungsprogramm oder ein Adressverwaltungsprogramm oder ein Investment- oder Wertpapierverwaltungsprogramm oder dergleichen. Diese Anwendungen haben nichts mit dem Fernsehgerät zu tun und sind deshalb nicht-fernsehbezogen. Der Aufruf dieser Anwendungen erfolgt dadurch, daß ein Benutzer über die Tastatur des Personalcomputers das zu der Anwendung zugehörige Programm startet und dann die erforderlichen Eingaben, beispielsweise die Internet-Adresse oder die Telefax-Nummer manuell eingibt.

Aufgabe der Erfindung ist es, ein Mediengerät zu schaffen, mit dem einem Benutzer bisher noch nicht vorhandene Betriebsmöglichkeiten eröffnet werden.

Diese Aufgabe wird bei einem Verfahren der eingangs genannten Art erfindungsgemäß dadurch gelöst, daß eine in einer Fernsehsendung angezeigte Kennzeichnung, beispielsweise eine Internet-Adresse, von dem Personalcomputer übernommen und zur weiteren Verwendung zur Verfügung gestellt wird. Des weiteren wird die Aufgabe bei einem Mediengerät der eingangs genannten Art erfindungsgemäß dadurch gelöst, daß eine in einer Fernsehsendung angezeigte Kennzeichnung, beispielsweise eine Internet-Adresse, von dem Personalcomputer übernommen und zur weiteren Verwendung zur Verfügung gestellt werden kann.

Wird somit in einer Fernsehsendung oder in einem Videotext oder dergleichen eine Kennzeichnung, also beispielsweise eine Internet-Adresse oder eine Telefax-Nummer oder eine Telefon-Nummer oder eine sonstige textliche oder symbolische Information, angezeigt, so wird durch die Erfindung erreicht, daß diese Kennzeichnung von dem Benutzer weiterverwendet werden kann. Zu diesem Zweck übernimmt der Personalcomputer die Kennzeichnung von der Fernsehsendung oder dem Videotext und stellt sie dem Benutzer zur weiteren Verwendung zur Verfügung.

So ist es möglich, daß mittels z.B. einer Fernbedienung durch den Benutzer oder automatisch durch eine zeit- oder ereignisabhängige Steuerung dem Personalcomputer signalisiert wird, daß er die derzeit von der Fernsehsendung angezeigte Kennzeichnung übernehmen soll. Danach kann von dem Benutzer oder automatisch durch den Personalcomputer eine fallspezifische Reaktion auf die Kennzeichnung ausgelöst und damit die Kennzeichnung weiterverwendet werden. Bei dieser weiteren Verwendung kann es sich um Reaktionen per Telekommunikation handeln, wie dies nachfolgend beschrieben ist. Es ist jedoch ebenfalls möglich, daß die Weiterverwendung nur in einer Verarbeitung der Kennzeichnung mittels eines Textverarbeitungs- oder Datenbankprogramms besteht.

So ist es durch die Erfindung beispielsweise möglich, daß eine durch die Kennzeichnung angesprochene Anwendung automatisch von dem Personalcomputer aufgerufen wird. Der Personalcomputer startet automatisch die zu der Kennzeichnung zugehörige Anwendung, also beispielsweise das Internet-Zugriffsprogramm oder das Telefax-Programm. Des weiteren führt der Personalcomputer automatisch die erforderlichen Eingaben durch, übergibt also automatisch beispielsweise die Internet-Adresse oder die Telefax-Nummer an das jeweilige Programm.

Der Benutzer muß also in diesem Fall weder die jeweilige Anwendung starten, noch muß er die erforderlichen Eingaben manuell durchführen. All diese Funktionen werden automatisch durchgeführt. Diese Funktionen des Mediengeräts waren bisher noch nicht vorhanden. Insoweit stellt die Erfindung eine wesentliche Verbesserung für den Benutzer dar, mit der die Bedienung des Mediengeräts beim Aufruf von nichtfernsehbezogenen Anwendungen wesentlich vereinfacht wird. Des weiteren ist der Aufruf der genannten Anwendungen auf die erfindungsgemäße Weise wesentlich schneller und weniger fehleranfällig als bei einem manuellen Aufruf durch den Benutzer.

Ebenfalls ist es möglich, daß der Personalcomputer bei einer in einer Fernsehsenung angezeigten sogenannten TED-Umfrage automatisch die von dem Benutzer gewünschte Telefon-Nummer wählt und der Benutzer sich auf diese Weise mittels des Personalcomputers an der TED-Umfrage beteiligt. Auch in diesem Fall wird dem Benutzer eine völlig neue Möglichkeit an die Hand gegeben, mit der er das Mediengerät bedienen kann. Dabei wird die Antwort des Benutzers automatisch von dem Personalcomputer an die entsprechende Telefon-Nummer weitergegeben, so daß auch insoweit die Bedienung des Mediengeräts für den Benutzer weiter vereinfacht wird.

In ähnlicher Weise ist es möglich, daß bei einer in einer Fernsehsendung angezeigten Hitparade oder dergleichen der Benutzer mittels des Personalcomputers seine Abstimmung unmittelbar an die Fernsehsendung übermittelt. Die Antwort des Benutzers kann dabei beispielsweise per e-mail über das Internet oder per Fax erfolgen. Entsprechend ist auch denkbar, daß ein Benutzer eine in einer Fernsehsendung beworbene Ware unmittelbar mittels des Personalcomputers z.B. per Fax bestellt. All diese Funktionen des Mediengeräts erfordern nur die Auswahl der entsprechenden Kennzeichnung durch den Benutzer. Die übrigen erforderlichen Maßnahmen werden dann automatisch aufgrund der Kennzeichnung durch den Personalcomputer durchgeführt.

Insgesamt wird durch die Erfindung eine bisher noch nicht vorhandene Interaktivität zwischen dem Fernsehgerät und dem Personalcomputer geschaffen, die eine Vielzahl neuer Betriebsmöglichkeiten des Mediengeräts eröffnet. Dies wird allein dadurch erreicht, daß die in der Fernsehsendung gezeigte Kennzeichnung von dem Personalcomputer übernommen und zur weiteren Verwendung zur Verfügung gestellt werden kann.

Bei einer vorteilhaften Ausgestaltung der Erfindung wird zumindest ein Bild der Fernsehsendung, in dem die Kennzeichnung enthalten ist, insbesondere in dem Personalcomputer abgespeichert. Damit wird erreicht, daß die Kennzeichnung nicht in Echtzeit, also während ihrer Anzeige in der Fernsehsendung, verarbeitet werden muß, sondern daß der Personalcomputer auch noch danach, also wenn die Fernsehsendung die Kennzeichnung nicht mehr anzeigt, noch auf die Kennzeichnung zugreifen und diese verarbeiten kann. Der Personalcomputer kann durch diesen Offline-Betrieb insbesondere im Hinblick auf die Erkennung der Kennzeichnung auch zeitlich aufwendigere und damit bessere Verfahren anwenden.

Bei einer weiteren vorteilhaften Ausgestaltung der Erfindung wird insbesondere mittels des Personalcomputers die Kennzeichnung in dem Bild lokalisiert und erkannt. Der Personalcomputer verarbeitet also das abgespeicherte Bild derart, daß er zuerst den Ort der Kennzeichnung innerhalb des Bilds ermittelt. Zu diesem Zweck wird das Bild einschließlich der darin enthaltenen Kennzeichnung einer Bildverarbeitung unterzogen. Danach führt der Personalcomputer eine Zeichenerkennung durch und interpretiert somit die Kennzeichnung im Sinne einzelner digitaler Zeichen. Diese digitalen Zeichen können dann von dem Personalcomputer entweder als Zeichen oder als Ergebnis einer logischen Verarbeitung in die zugehörige Anwendung eingegeben werden.

Bei einer vorteilhaften Weiterbildung der Erfindung werden diejenigen Bereiche des Bildes ermittelt, die insbesondere alphanumerische Zeichen darstellen. Durch bildverarbeitende Maßnahmen werden von dem Personalcomputer diejenigen Bereiche aus dem abgespeicherten Bild herausgearbeitet, in denen voraussichtlich Buchstaben oder Zahlen oder dergleichen vorhanden sind. Daraus ergibt sich der Vorteil, daß sich der Personalcomputer danach nur noch auf diese Bereiche konzentrieren kann, wodurch die Zeitdauer für die Erkennung der Kennzeichnung wesentlich verringert wird.

Besonders zweckmäßig ist es, wenn ein farbiges Bild in ein Schwarz/Weiß-Bild umgewandelt wird, und/oder wenn Grauwerte in einem Schwarz/Weiß-Bild eliminiert werden. Durch die auf diese Weise erzeugten Kontraste ist es für den Personalcomputer wesentlich einfacher und damit besonders schnell und sicher möglich, denjenigen Bereiche in dem abgespeicherten Bild zu ermitteln, in dem sich die Kennzeichnung befindet. Dabei ist es möglich, daß die Kennzeichnung auch Bestandteile aufweist, die für den Benutzer nicht lesbar oder deutbar sind.

Des weiteren ist es besonders zweckmäßig, wenn diejenigen Bereiche des Bildes, die keine Zeichen darstellen, durch eine einheitliche Darstellung ersetzt werden. Die nicht mit Zeichen versehenen Bereiche werden auf diese Weise ausgeblendet und eindeutig als für die Erkennung der Kennzeichnung unwesentlich gekennzeichnet. Auch durch diese Maßnahmen wird somit die Lokalisierung und Erkennung der Kennzeichnung weiter verbessert.

Bei einer vorteilhaften Weiterbildung der Erfindung werden die einzelnen Zeichen insbesondere mittels eines Zeichenerkennungsprogramms erkannt. Derartige Programme sind als sogenannte OCR-Programme im Handel erhältlich. Es können somit bereits vorhandene und auf die Zeichenerkennung spezialisierte Programme eingesetzt werden, um die einzelnen Zeichen in dem lokalisierten Bereich des Bilds im Sinne von digitalen Zeichen zu erkennen. Insoweit müssen keine besonderen Programme für die Erkennung der Kennzeichnung entwickelt werden, wodurch der Aufwand für die Erstellung des erfindungsgemäßen Verfahrens wesentlich verringert wird. Des weiteren kann durch eine entsprechende Auswahl des Zeichenerkennungsprogramms die Fehlerfreiheit bei der Erkennung der Kennzeichnung weiter erhöht werden.

Danach werden die auf diese Weise erkannten Zeichen zu der Kennzeichnung zusammengesetzt. Daraus ergibt sich eine Zeichenfolge, die - unter der Voraussetzung der fehlerfreien Erkennung der einzelnen Zeichen - der anfangs in der Fernsehsendung angezeigten Kennzeichnung entspricht. Wesentlich ist dabei jedoch, daß die auf diese Weise zusammengesetzte Kennzeichnung nicht mehr in der Form von Bilddaten vorliegt, sondern in der Form von digitalen Daten, beispielsweise von ASCII-Daten, die für den Personalcomputer Abkürzungen von Buchstaben oder Zahlen oder dergleichen darstellen und deshalb von dem Personalcomputer als programmlogisch verwendbare Informationen unmittelbar weiterverabeitet werden können.

Bei einer vorteilhaften Weiterbildung der Erfindung wird die Kennzeichnung auf ihre Plausibilität überprüft. Der Personalcomputer prüft also, ob es sich bei der ermittelten Kennzeichnung überhaupt um eine sinnvolle Kennzeichnung handelt, die ihm bekannt ist, und der er beispielsweise eine Anwendung zuordnen kann. Dabei kann unter anderem durch eine Suche nach bestimmten Schlüsselwörtern oder durch eine bestimmte logische Kombinatorik erreicht werden, daß z.B. Rechtschreibfehler oder dergleichen erkannt werden und daraus die korrekten Schlußfolgerungen gezogen werden. Auf diese Weise wird erreicht, daß nur solche Kennzeichnungen von dem Personalcomputer weiterverarbeitet werden, die zu einer vorhandenen Anwendung des Personalcomputers führen. Kann der Personalcomputer keine zugehörige Anwendung zu der ermittelten Kennzeichnung finden, so wird die Kennzeichnung beispielsweise nicht mehr weiterverarbeitet und kann als fehlerhaft an den Benutzer gemeldet werden.

Besonders zweckmäßig ist es, wenn die Kennzeichnung mit abgespeicherten Wörtern oder Abkürzungen oder dergleichen verglichen wird, beispielsweise mit "Telefon" oder "Fax:" oder "Tel.:" oder "http://" oder "www." usw.. Ermittelt der Personalcomputer beispielsweise als Kennzeichnung unter anderem die Zeichenfolge "www.", so kann der Personalcomputer durch den Vergleich mit den vorab abgespeicherten Wörtern oder Abkürzungen folgern, daß es sich bei der in der Fernsehsendung angezeigten Kennzeichnung um eine Internet-Adresse gehandelt hat. Ermittelt der Personalcomputer z.B. die Zeichenfolge "wnw.", so kann er daraus ableiten, daß vermutlich ein Rechtschreibfehler vorliegt, und daß es sich vermutlich um die Zeichenfolge "www." handelt. Dies kann dann von dem Personalcomputer in die korrekte Zeichenfolge korrigiert werden. Aus der Zeichenfolge "www." schließt der Personalcomputer dann, daß es sich um eine Internet-Adresse handelt. Dem Personalcomputer ist bekannt, daß für eine derartige Internet-Adresse ein Internet-Zugriffsprogramm vorhanden ist, so daß der Personalcomputer insoweit der ermittelten Kennzeichnung ein zugehörige Anwendung zuordnen kann. Damit ist es dem Personalcomputer möglich, die ermittelte Kennzeichnung zumindest als nicht fehlerhaft zu erkennen.

Bei einer weiteren vorteilhaften Weiterbildung der Erfindung wird insbesondere in dem Personalcomputer ein Programm, beispielsweise ein Internet-Zugriffsprogramm, gestartet, das zum Aufrufen einer zu der Kennzeichnung zugehörigen Anwendung vorgesehen ist. Besonders zweckmäßig ist es, wenn die Kennzeichnung an die gestartete Anwendung übergeben wird. Nachdem also der Personalcomputer erkannt hat, daß zu der ermittelten Kennzeichnung eine zugehörige Anwendung vorhanden ist, startet er automatisch diese Anwendung. Dabei übergibt der Personalcomputer ebenfalls automatisch die ermittelte Kennzeichnung an die gestartete Anwendung. Der Personalcomputer erkennt also nicht nur automatisch anhand der anfangs in der Fernsehsendung angezeigten Kennzeichnung, um welche Anwendung es sich handelt, sondern er startet diese Anwendung auch sofort und greift z.B. ohne jegliches weiteres Zutung des Benutzers beispielsweise auf die zu der Kennzeichnung zugehörige Homepage im Internet zu. Die Erfindung stellt somit insgesamt einen vollautomatischen Zugriff auf eine durch die Kennzeichnung definierte Information oder dergleichen zur Verfügung, sobald die Kennzeichnung in einer Fernsehsendung angezeigt wird. Es versteht sich, daß das erfindungsgemäße Mediengerät auch in anderer Weise voreinstellbar ist. Insbesondere ist es möglich, das Verhalten des Mediengeräts nach den Wünschen des Benutzers durch eine entsprechende Konfiguration der zugehörigen Programme zu steuern und auszugestalten.

Bei einer vorteilhaften Ausgestaltung der Erfindung werden die Fernsehsendung und die Anwendung gleichzeitig auf einem gemeinsamen Bildschirm angezeigt. Dies bringt den wesentlichen Vorteil mit sich, daß beide Informationsquellen, also die Fernsehsendung einerseits sowie die nicht-fernsehbezogene Anwendung andererseits gleichzeitig von dem Benutzer auf ein- und demselben Bildschirm betrachtet werden können. Der Informationsgehalt, der auf diese Weise an den Benutzer weitergegeben wird, ist damit wesentlich größer als bisher. Insbesondere ist es für den Benutzer möglich, einerseits die Fernsehsendung wie üblich weiterzuverfolgen, und gleichzeitig Informationen aus der nicht-fernsehbezogenen Anwendung, also beispielsweise aus dem Internet abzurufen. Dies stellt ganz allgemein eine bisher nicht bekannte zeitgleiche Betriebsweise des Fernsehgerät und des Personalcomputers dar, aus der sich eine Vielzahl völlig neuartiger Anwendungsmöglichkeiten ergibt. Des weiteren kommt durch diese gleichzeitige Darstellung der Fernsehsendung und der Anwendung auf dem gemeinsamen Bildschirm die erfindungsgemäße Möglichkeit der Interaktivität zwischen dem Fernsehgerät und dem Personalcomputer besonders deutlich zum Ausdruck. Der Benutzer kann auf ein- und demselben Bildschirm einerseits die Fernsehsendung verfolgen und andererseits beispielsweise wie bereits erläutert per e-mail seine Meinung oder dergleichen zu der Fernsehsendung an den Anbieter der Fernsehsendung versenden.

Besonders zweckmäßig ist es, wenn der Bildschirm in gegebenenfalls überlappende Bereiche für die Fernsehsendung und die Anwendung aufgeteilt wird. Damit wird die Fernsehsendung und die nicht-fernsehbezogene Anwendung in gleicher Weise auf dem Bildschirm dargestellt, wie dies üblicherweise bei den meisten Programmen des Personalcomputers in der Form von sogenannten Windows der Fall ist. Diese Windows sind für den Benutzer bekannt, so daß durch die Erfindung insoweit keine neue Darstellungsweisen verwendet werden, an die sich der Benutzer gewöhnen müßte. Die Anwendung und Bedienung der Erfindung ist somit für den Benutzer einfach und schnell durchführbar. Es wird allerdings darauf hingewiesen, daß die Erfindung auch mit zwei separaten Bildschirmen für das Fernsehgerät und den Personalcomputer durchführbar ist.

Bei einer weiteren vorteilhaften Ausgestaltung der Erfindung wird der automatische Aufruf der zu der Kennzeichnung zugehörigen Anwendung durch einen Benutzer des Mediengeräts insbesondere mittels einer Fernbedienung ausgelöst. Gleichfalls ist es möglich, daß die Auslösung nicht durch eine Fernbedienung, sondern durch die Maus oder die Tastatur des Personalcomputers oder durch gesprochene Befehle des Benutzer hervorgerufen wird. Damit wird dem Benutzer die Möglichkeit gegeben, daß nur dann die zu einer in einer Fernsehsendung angezeigten Kennzeichnung zugehörige Anwendung aufgerufen wird, wenn er dies wünscht. Der Benutzer kann also aktiv bestimmen, ob der Personalcomputer auf die erfindungsgemäße Weise die zugehörige Anwendung automatisch aufruft oder nicht. Entsprechend kann der Benutzer durch die Auswahl einer bestimmten Kennzeichnung aus einer Mehrzahl von Kennzeichnungen, beispielsweise einer bestimmten Telefon-Nummer aus einer Mehrzahl von Telefon-Nummern bei einer TED-Umfrage, die von ihm gewünschte Antwort auswählen und automatisch auslösen. Dies stellt einen weiteren Vorteil bei der Bedienung und Anwendung der Erfindung dar.

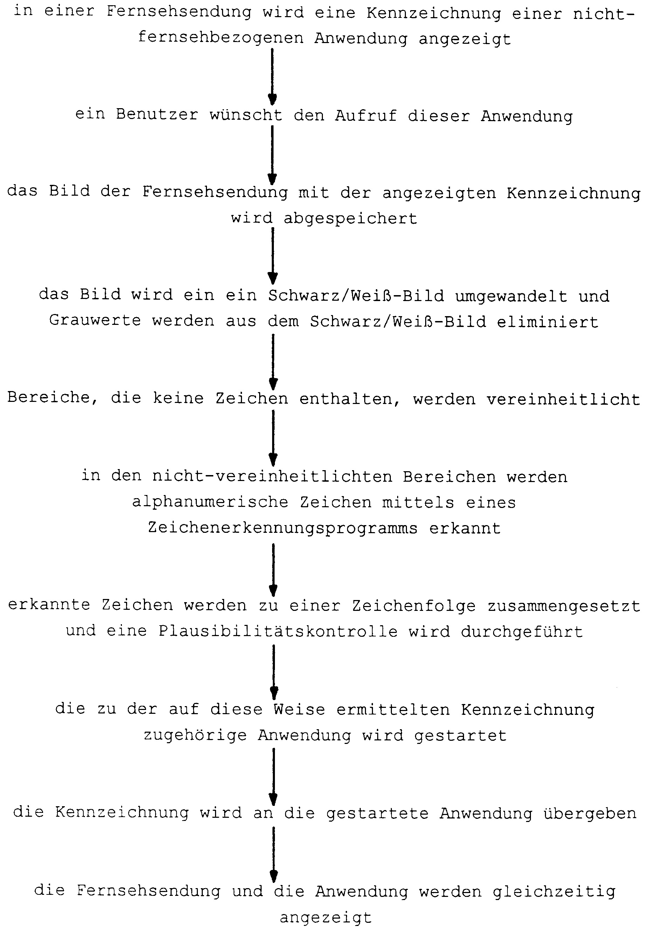

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Ablaufdiagramm eines Ausführungsbeispiels eines erfindungsgemäßen Verfahrens zum Betreiben eines ein Fernsehgerät und einen Personalcomputer aufweisenden Mediengeräts. Das beschriebene Ausführungsbeispiel betrifft dabei insbesondere ein Verfahren zum Aufrufen einer nicht-fernsehbezogenen Anwendung auf einem ein Fernsehgerät und einen Personalcomputer aufweisenden Mediengerät. Es wird jedoch ausdrücklich darauf hingewiesen, daß dies, wie bereits erwähnt wurde, nur eine von einer Vielzahl von Anwendungsmöglichkeiten darstellt, die mit der Erfindung realisiert werden können. Das Ausführungsbeispiel darf deshalb keinesfalls als die Erfindung beschränkend angesehen werden. Insoweit wird ausdrücklich auf die Patentansprüche und die Beschreibungseinleitung verwiesen.

Bei dem beschriebenen Ausführungsbeispiel ist zur Durchführung des Verfahrens ein Mediengerät vorgesehen, das ein Fernsehgerät aufweist, in das ein Personalcomputer Integriert ist. Das Fernsehgerät ist mit einer Fernbedienung zum Steuern desselben versehen. An den Personalcomputer ist eine Tastatur und gegebenenfalls eine Maus angeschlossen. Des weiteren ist der Personalcomputer mit einem Modem versehen, mit dem er mit dem allgemeinen Telefonnetz verbunden ist. Der Bildschirm des Fernsehgeräts dient einerseits dem Fernsehgerät sowie andererseits dem Personalcomputer zur Anzeige.

Das Fernsehgerät ist zum Empfang von Fernsehsendungen vorgesehen, die dann auf dem Bildschirm angezeigt werden. Gleichzeitig steht das Fernsehbild über eine datentechnische Kopplung, beispielsweise über eine sogenannte Framegrabber-Karte oder eine Decoder-Karte oder dergleichen als digitale Information dem Personalcomputer zur Verfügung. Die genannte Karte ist dabei insbesondere in dem Personalcomputer untergebracht. Der Personalcomputer ist insoweit durch die genannte datentechnische Kopplung mit dem Fernsehgerät zur Übernahme des Fernsehbilds in der Lage.

Der Personalcomputer ist zur Ausführung von Anwendungen vorgesehen, die auch auf dem Bildschirm des Fernsehgeräts angezeigt werden. Bei einer Anwendung des Personalcomputers kann es sich beispielsweise um ein Textverarbeitungsprogramm oder ein Telefax-Programm oder ein Internet-Zugriffsprogramm oder dergleichen handeln. Mit dem Telefax-Programm kann der Personalcomputer Telefaxe über das Modem beispielsweise versenden. Mit dem Internet-Zugriffsprogramm kann der Personalcomputer auf das Internet zugreifen und dort beispielsweise sogenannte Homepages auf dem Bildschirm zur Anzeige bringen. Derartige Anwendungen des Personalcomputers haben nichts mit dem Fernsehgerät zu tun und sind deshalb nicht-fernsehbezogen.

Häufig wird in einer Fernsehsendung eine Telefax-Nummer angezeigt, an die ein Benutzer beispielsweise seine Adresse senden muß, um weitergehende Informationen zu der Fernsehsendung zu erhalten. Ebenfalls wird manchmal eine Internet-Adresse in der Fernsehsendung angegeben, über die auf eine zu der Fernsehsendung gehörige Homepage im Internet zugegriffen werden kann, um beispielsweise die Inhalte der Fernsehsendung nochmals in Ruhe dort zu lesen.

Der Benutzer kann daraufhin, falls erwünscht, mittels der entsprechenden Anwendungen des Personalcomputers das erwünschte Telefax verschicken oder den erwünschten Zugriff auf das Internet ausführen. Insoweit stellen die Telefax-Nummer und die Internet-Adresse verallgemeinert Kennzeichnungen dar, die in der Fernsehsendung angezeigt werden, und die auf nicht-fernsehbezogene Anwendungen des Personalcomputers hinweisen.

Wünscht der Benutzer eine Reaktion auf die in der Fernsehsendung angezeigte Kennzeichnung, so betätigt er eine entsprechende Taste der Fernbedienung, solange die Kennzeichnung auf dem Bildschirm vorhanden ist. Dies hat zur Folge, daß das Bild der Fernsehsendung mit der angezeigten Kennzeichnung in einem Speicher des Personalcomputers abgespeichert wird. Gegebenenfalls ist es auch möglich oder erforderlich, daß nicht nur ein Bild, sondern daß eine Abfolge mehrerer Bilder der Fernsehsendung in dem Personalcomputer abgespeichert werden. Dies kann insbesondere dann erforderlich sein, wenn der Empfang des Fernsehbilds schlecht ist, oder wenn das Kennzeichen sich in dem Fernsehbild bewegt. Durch die Speicherung mehrerer Bilder können somit auch durch das Fernsehbild laufende Texte oder dergleichen erkannt und verarbeitet werden.

Das abgespeicherte Bild der Fernsehsendung enthält dabei nur Bildinformationen. Dies bedeutet, daß für jeden Punkt des Bilds nur dessen Farbe, Helligkeit oder dergleichen abgespeichert ist. Die Bildinformationen enthalten jedoch keine digitalen Zeichen im Sinne von beispielsweise ASCII-Zeichen, mit denen Texte in abgekürzter Weise von dem Personalcomputer abgespeichert und verarbeitet werden können. Wie nachfolgend beschrieben, werden die Bildinformationen in digitale Zeichen umgewandelt. Hierzu wird die in dem Bild der Fernsehsendung enthaltene Kennzeichnung lokalisiert und erkannt.

Das farbig abgespeicherte Bild der Fernsehsendung wird zuerst in ein Schwarz/Weiß-Bild umgewandelt. Dabei setzt der Personalcomputer durch entsprechend programmierte Algorithmen die Farbkontraste des farbigen Bilds in unterscheidbare Schwarz/Weiß-Kontraste mit scharfkantigen Übergängen um. Bei dieser Umwandlung wird davon ausgegangen, daß zwischen dem in dem Fernsehbild enthaltenen Kennzeichen und dem Hintergrund ein klar erkennbarer Farb- und/oder Helligkeitskontrast vorhanden ist, damit ein Benutzer das Kennzeichen auf dem Bildschirm auch erkennen und lesen kann.

Danach werden vorhandene Grauwerte des Schwarz/Weiß-Bilds eliminiert. Dies bedeutet, daß der Personalcomputer durch entsprechend programmierte Algorithmen ein positives Schwarz/Weiß-Bild erzeugt, das keine Graustufen mehr aufweist. Diese Bilder werden des weiteren zu einem negativen Schwarz/Weiß-Bild invertiert. Danach werden die positiven und die negativen Schwarz/Weiß-Bilder in dem Personalcomputer abgespeichert.

Unter anderem durch Vergleichsoperationen und dergleichen werden aus dem positiven und dem negativen Schwarz/Weiß-Bild all diejenigen Bereiche ermittelt, die mit einer gewissen Wahrscheinlichkeit keine alphanumerische Zeichen enthalten.

Unter alphanumerischen Zeichen werden dabei Buchstaben, Zahlen, Satzzeichen, sonstige logische Zeichen und dergleichen verstanden. Die genannten Bereiche werden von dem Personalcomputer durch entsprechend programmierte Algorithmen ermittelt, wobei hierzu auch Wahrscheinlichkeitsberechnungen und dergleichen herangezogen werden. Die ermittelten Bereiche, in denen keine alphanumerische Zeichen enthalten sind, werden danach vereinheitlicht, indem diese Bereiche beispielsweise durch eine einheitliche Hintergrundfarbe ersetzt oder abgetrennt oder gelöscht werden.

Sämtliche bisher durchgeführten Operationen stellen reine Bildverarbeitungen dar, bei denen keine digitalen Zeichen, wie beispielsweise ASCII-Zeichen vorhanden sind. Die Umwandlung in derartige digitale Zeichen erfolgt in dem nachfolgend beschriebenen Schritt.

In den nicht-vereinheitlichten Bereichen, in denen also mit einer gewissen Wahrscheinlichtkeit alphanumerische Zeichen vorhanden sind, wird nunmehr eine Zeichenerkennung durchgeführt. Hierzu ist in dem Personalcomputer ein sogenanntes Zeichenerkennungsprogramm bzw. OCR-Programm vorhanden, das versucht, in den angegebenen Bereichen alphanumerische Zeichen zu erkennen. Wird von dem Zeichenerkennungsprogramm ein derartiges Zeichen erkannt, so wird dieses Zeichen in ein digitales oder sonstiges programmlogisches Zeichen umgewandelt.

Es werden also von dem Zeichenerkennungsprogramm aus den reinen Bildinformationen digitale oder sonstige Zeichen erzeugt. Dabei kann es sich beispielsweise um die bereits erwähnten ASCII-Zeichen handeln. In jedem Fall liegen nach der Zeichenerkennung digitale Zeichen vor, die von dem Personalcomputer in abgekürzter Weise unmittelbar logisch abgespeichert und verarbeitet werden können.

Die von dem Zeichenerkennungsprogramm in den nicht-vereinheitlichten Bereichen ermittelten digitalen Zeichen werden daraufhin zu einer Zeichenfolge zusammengesetzt. Unter der Voraussetzung, daß die bisher durchgeführten Operationen fehlerfrei waren, entspricht diese Zeichenfolge der in der Fernsehsendung angezeigten Kennzeichnung. Es liegt somit nunmehr die Kennzeichnung als digitale Zeichenfolge in dem Personalcomputer vor.

Vorab werden in dem Personalcomputer bestimmte Wörter oder Abkürzungen oder dergleichen abgespeichert, die auf Anwendungen oder sonstige programmlogische Entscheidungs- oder Verarbeitungsschritte hinweisen, die in dem Personalcomputer enthalten sind. Ist der Personalcomputer beispielsweise mit einem Telefax-Programm versehen, so stellt beispielsweise die Abkkürzung "Fax:" einen Hinweis auf diese Anwendung dar. Entsprechend weisen die Abkürzungen "http://" oder "www." oder dergleichen auf das Internet-Zugriffsprogramm hin. Die jeweilige Anwendung, auf die das Wort bzw. die Abkürzung hinweist, ist dabei mit dem Wort bzw. der Abkürzung ebenfalls abgespeichert.

Es folgt dann eine Plausibilitätskontrolle. Die von dem Personalcomputer ermittelte Kennzeichnung wird mit den vorab abgespeicherten Wörtern oder Abkürzungen verglichen. Stellt der Personalcomputer eine Übereinstimmung mit einem der abgespeicherten Wörter bzw. Abkürzungen fest, so folgert der Personalcomputer daraus, daß sich die ermittelte Kennzeichnung auf diejenige Anwendung bezieht, auf die das vorab abgespeicherte Wort bzw. die vorab abgespeicherte Abkürzung hinweist. Dabei ist es möglich, daß der Personalcomputer Algorithmen insbesondere zur syntaktischen und semantischen Fehlerkorrektur oder dergleichen anwendet.

Findet der Personalcomputer jedoch kein Wort bzw. keine Abkürzung, die mit der ermittelten Kennzeichnung übereinstimmt, so kann der Personalcomputer die ermittelte Kennzeichnung nicht weiterverarbeiten. Dies kann auf einer fehlerhaften Ermittlung der Kennzeichnung beruhen oder auf dem Nicht-Vorhandensein der zu der Kennzeichnung zugehörigen Anwendung. Der Personalcomputer kann dies beispielsweise durch eine entsprechende Mitteilung an den Benutzer melden. Ebenfalls ist es möglich, daß die ermittelten Zeichen z.B. zur Korrektur oder sonstigen Weiterverarbeitung durch den Benutzer an ein Textverarbeitungsprogramm weitergegeben werden.

Hat der Personalcomputer zu der ermittelten Kennzeichnung eine zugehörige Anwendung gefunden, so startet der Personalcomputer diese Anwendung. Dies bedeutet, daß der Personalcomputer beispielsweise das Telefax-Programm oder das Internet-Zugriffsprogramm automatisch startet. Des weiteren übergibt der Personalcomputer die ermittelte Kennzeichnung an die gestartete Anwendung. Er übergibt also beispielsweise die ermittelte Telefax-Nummer bzw. Internet-Adresse an das Telefax-Programm bzw. das Internet-Zugriffsprogramm. Diese Anwendungen können dann unmittelbar auf diese Kennzeichnungen zugreifen. Dies bedeutet, daß beispielsweise das Internet-Zugriffsprogramm unmittelbar auf die zu der ermittelten Internet-Adresse zugehörige Homepage zugreift, oder daß beispielsweise das Telefax-Programm das zu versendende Telefax bereits mit der ermittelten Telefax-Nummer versieht und damit so weit vorbereitet, daß der Benutzer nur noch seinen gewünschten Text über die Tastatur eingeben muß.

Die gestartete Anwendung wird zusammen mit der Fersehsendung auf dem Bildschirm des Fernsehgerät gleichzeitig angezeigt. Hierzu ist der Bildschirm in mindestens zwei Teile aufgeteilt. Dabei kann der Bildschirm beispielsweise in zwei Hälften aufgeteilt sein. Ebenfalls ist es möglich, daß der Bildschirm mindestens zwei sogenannte Windows aufweist, in denen einerseits das Fernsehprogramm und andererseits die Anwendung angezeigt wird. In dem Window der Anwendung ist dann ein Cursor vorhanden, so daß der Benutzer beispielsweise den gewünschten Text des Telefaxes mittels der Tastatur an der Position des Cursors eingeben kann.

Die beiden Windows für die Fernsehsendung und die Anwendung können verschieden groß sein und/oder einander überlappen und/oder jeweils nur einen Ausschnitt aus der Fernsehsendung bzw. der Anwendung anzeigen oder dergleichen.

## Patentansprüche

1. Verfahren zum Betreiben eines ein Fernsehgerät und einen Personalcomputer aufweisenden Mediengeräts, dadurch gekennzeichnet, daß eine in einer Fernsehsendung angezeigte Kennzeichnung, beispielsweise eine Internet-Adresse, von dem Personalcomputer übernommen und zur weiteren Verwendung zur Verfügung gestellt wird.

2. Verfahren nach Anspruch 1, dadurch gekennzeichnet, daß zumindest ein Bild der Fernsehsendung, in dem die Kennzeichnung enthalten ist, insbesondere in dem Personalcomputer abgespeichert wird.

3. Verfahren nach Anspruch 1 oder 2, dadurch gekennzeichnet, daß insbesondere mittels des Personalcomputers die Kennzeichnung in dem Bild lokalisiert und erkannt wird.

4. Verfahren nach einem der Ansprüche 1 bis 3, dadurch gekennzeichnet, daß diejenigen Bereiche des Bildes ermittelt werden, die insbesondere alphanumerische Zeichen darstellen.

5. Verfahren nach Anspruch 4, dadurch gekennzeichnet, daß ein farbiges Bild in ein Schwarz/Weiß-Bild umgewandelt wird.

6. Verfahren nach Anspruch 4 oder 5, dadurch gekennzeichnet, daß Grauwerte in einem Schwarz/Weiß-Bild eliminiert werden.

7. Verfahren nach einem der Ansprüche 4 bis 6, dadurch gekennzeichnet, daß diejenigen Bereiche des Bildes, die keine Zeichen darstellen, durch eine einheitliche Darstellung ersetzt werden.

8. Verfahren nach Anspruch 6 oder 7, dadurch gekennzeichnet, daß die einzelnen Zeichen insbesondere mittels eines Zeichenerkennungsprogramms erkannt werden.

9. Verfahren nach Anspruch 8, dadurch gekennzeichnet, daß die Zeichen zu der Kennzeichnung zusammengesetzt werden.

10. Verfahren nach Anspruch 9, dadurch gekennzeichnet, daß die Kennzeichnung auf ihre Plausibilität überprüft wird.

11. Verfahren nach Anspruch 10, dadurch gekennzeichnet, daß die Kennzeichnung mit abgespeicherten Wörtern oder Abkürzungen oder dergleichen verglichen wird, beispielsweise mit "Telefon" oder "Fax:" oder "Tel.:" oder "http://" oder "www." usw..

12. Verfahren nach einem der vorstehenden Ansprüche, dadurch gekennzeichnet, daß insbesondere in dem Personalcomputer ein Programm, beispielsweise ein Internet-Zugriffsprogramm, gestartet wird, das zum Aufrufen einer zu der Kennzeichnung zugehörigen Anwendung vorgesehen ist.

13. Verfahren nach Anspruch 12, dadurch gekennzeichnet, daß die Kennzeichnung an die gestartete Anwendung übergeben wird.

14. Verfahren nach einem der vorstehenden Ansprüche, dadurch gekennzeichnet, daß die Fernsehsendung und die Anwendung gleichzeitig auf einem gemeinsamen Bildschirm angezeigt werden.

15. Verfahren nach Anspruch 14, dadurch gekennzeichnet, daß der Bildschirm in gegebenenfalls überlappende Bereiche für die Fernsehsendung und die Anwendung aufgeteilt wird.

16. Verfahren nach einem der vorstehenden Ansprüche, dadurch gekennzeichnet, daß die Zur-Verfügung-Stellung der Kennzeichnung durch einen Benutzer des Mediengeräts insbesondere mittels einer Fernbedienung ausgelöst wird.

17. Mediengerät, das ein Fernsehgerät und einen Personalcomputer aufweist, dadurch gekennzeichnet, daß eine in einer Fernsehsendung angezeigte Kennzeichnung, beispielsweise eine Internet-Adresse, von dem Personalcomputer übernommen und zur weiteren Verwendung zur Verfügung gestellt werden kann.

18. Mediengerät nach Anspruch 17, dadurch gekennzeichnet, daß insbesondere in dem Personalcomputer ein Speicher vorgesehen ist, in dem zumindest ein Bild der Fernsehsendung, in dem die Kennzeichnung enthalten ist, speicherbar ist.

19. Mediengerät nach Anspruch 17 oder 18, dadurch gekennzeichnet, daß ein gemeinsamer Bildschirm für das Fernsehgerät und den Personalcomputer vorgesehen ist.

20. Mediengerät nach einem der Ansprüche 17 bis 19, dadurch gekennzeichnet, daß das Mediengerät mit Mitteln versehen ist, insbesondere mit einer Fernbedienung, mit denen die Zur-Verfügung-Stellung der Kennzeichnung durch einen Benutzer auslösbar ist.
